# EUROPÄISCHE PATENTANMELDUNG

(11) **EP 2 599 575 A1**
(43) Veröffentlichungstag der Anmeldung: **05.06.2013**
(21) Anmeldenummer: 11191547.6
(22) Anmeldetag: 01.12.2011
(51) Int. Cl.: B23K 26/06, B23K 26/38, F01D 5/18

(54) **Laserbohren von Durchgangsbohrungen ohne Schutz im Inneren**

(71) Anmelder: Siemens Aktiengesellschaft, 80333 München (DE)
(72) Erfinder: Galander, Uwe, 12623 Berlin (DE); Massa, Andrea, 12157 Berlin (DE); Wilkenhöner, Rolf, 14532 Kleinmachnow (DE); Wollnik, Adrian, 13585 Berlin (DE)

(57) **Zusammenfassung**

Durch die Verwendung von sehr kurzen Laserpulsen von 0,1mms - 0,3mms und optional bei relativ hoher Pulsfrequenz von 20Hz - 30 Hz und sehr geringer Energie von 2 - 3 Joule und Anpassung der Fokuslage (22) ist ein Schutz eines Innenraums (4) nicht notwendig.

## Beschreibung

Die Erfindung betrifft das Laserbohren von Durchgangsbohrungen durch eine Wand von hohlen Bauteilen, bei denen der Hohlraum nicht vor den Laserstrahlen beschützt werden muss.

Die Erzeugung von Durchgangsbohrungen oder das Wiederöffnen von zylindrischen Kühlluftbohrungen mittels Laser sind Stand der Technik bei Gasturbinenschaufeln.

Nach dem heutigen Stand der Technik werden gepulste Laserstrahlen und sehr hohe Energiekonzentrationen verwendet. Damit der Laserstrahl keinen unerwünschten Schaden in den Innenräumen erzeugt, werden die Innenkanäle vor den Laserstrahleinflüssen durch aufwändiges Einbringen von Wachs geschützt.

Es ist daher Aufgabe der Erfindung ein Laserbohren ohne diese Schutzvorrichtungen durchzuführen.

Die Aufgabe wird gelöst durch ein Verfahren gemäß Anspruch 1.

In den Unteransprüchen sind weitere vorteilhafte Maßnahmen aufgelistet, die beliebig miteinander kombiniert werden können, um weitere Vorteile zu erzielen.

Es zeigen:
- Figur 1: eine schematische Darstellung eines Lasers mit einem Laserstrahl beim Erzeugen eines Durchgangslochs,
- Figur 2: eine Turbinenschaufel,
- Figur 3: eine Liste von Superlegierungen.

Die Figuren und die Beschreibung stellen nur Ausführungsbeispiele der Erfindung dar.

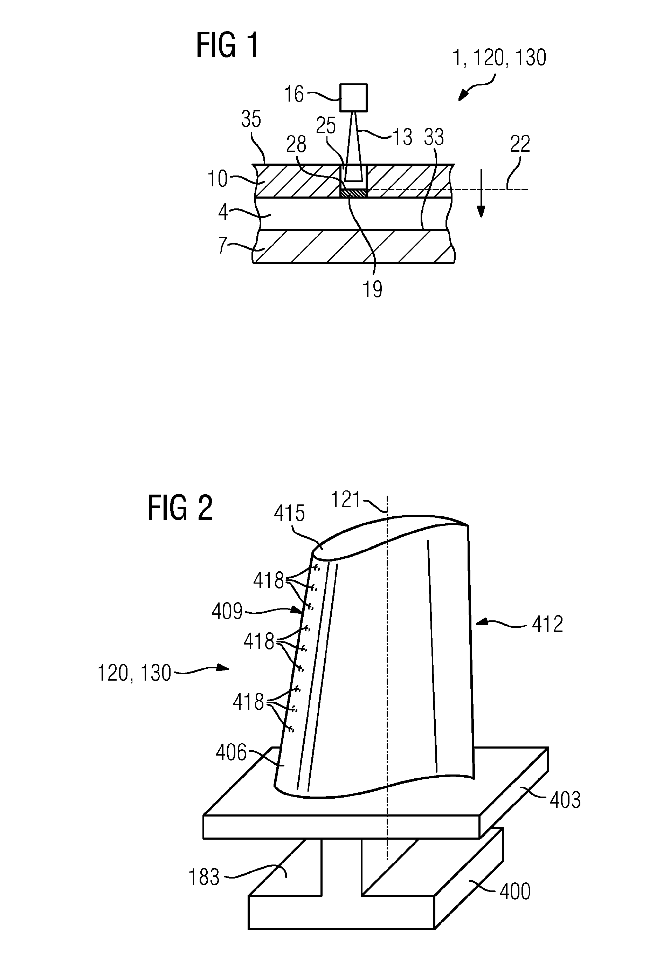

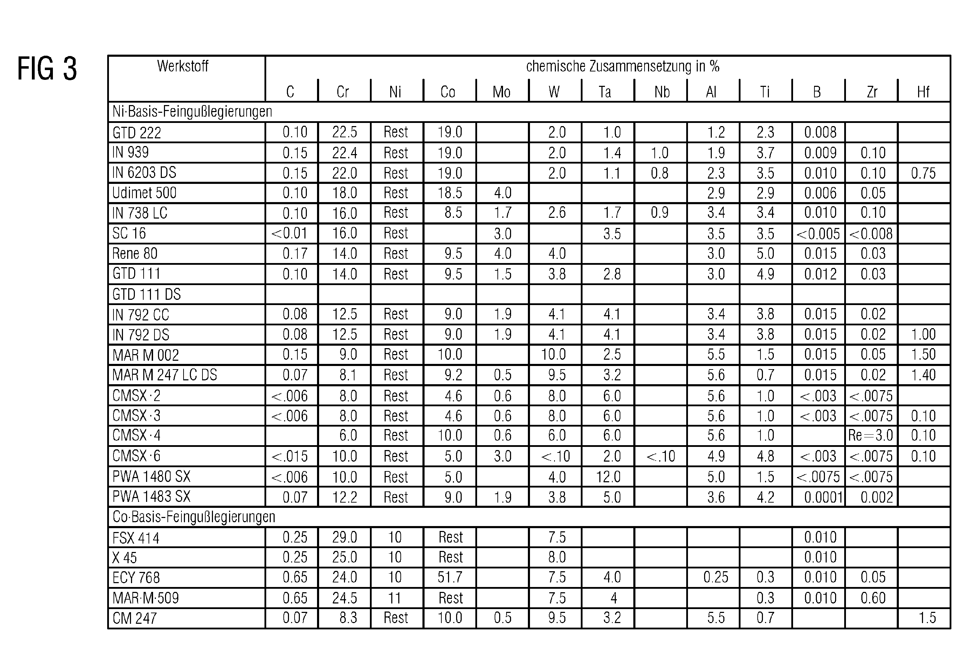

Figur 1 zeigt ein hohles Bauteil 1, 120, 130 mit einem Hohlraum 4.
Das hohle Bauteil 1 weist eine Wand 10 auf, in der ein Durchgangsloch 25 erzeugt werden soll. Dies ist insbesondere ein zylindrisches Durchgangsloch 25.
Die Materialien, die bearbeitet werden, sind insbesondere bei Gasturbinenschaufeln nickel- oder kobaltbasierte Superlegierungen (insbesondere gemäß Fig. 3). Ebenso können eine oder mehrere Schichten (MCrAlX, keramische Schichten) auf der Oberfläche 36 vorhanden sein, die dann auch durchbohrt wird/werden.

Eine Innenstruktur 33 oder eine innere Wand 7 des hohlen Bauteils 1, die dem Durchgangsloch 25 gegenüberliegt, darf nicht beschädigt werden, da sie ebenfalls eine tragende Rolle spielt, einen Kühlkanal darstellt oder sonstige wichtige Oberflächenstrukturen aufweist.

Die Laserparameter wie Pulsdauer und optional Laserenergie, Pulsfrequenz, Fokuslage müssen sehr genau für jede einzelne Bohrung 25, d.h. Bohrungstiefe, Durchmesser eingestellt und gegebenenfalls verändert werden.

Vorzugsweise wird der Bohrprozess auf einem Laserbohrer im Millisekundenbereich (Millisekundenlaser) durchgeführt. Vorzugsweise kann auch ein Nanolaser verwendet werden.

Es werden dabei aber kurze Laserpulse von 0,1ms - 0,3ms, vorzugsweise mit relativ hoher Pulsfrequenz von 20Hz - 30Hz, aber ganz insbesondere eine sehr geringe Energie von 2 Joule - 3 Joule angewendet.

Ein Laser 16 erzeugt Laserstrahlen 13 (schematisch dargestellt, exemplarisch für energische Strahlen) mit einer gewissen Fokuslage 22.
Die Fokuslage 22 des Laserstrahls 13 liegt vorzugsweise auf der Oberfläche 28 des noch abzutragenden Bereichs 19 und wird ganz vorzugsweise kontinuierlich in Bohrrichtung verändert (angedeutet durch den Pfeil nach unten).

Mit diesem Laserparameter oder -parametern ist der Abtrag von Material der Wand 10 nur im Fokus 22 des Laserstrahls 13 möglich.

Um mit einer solch geringen Strahlenergie die Durchgangsbohrung 25 überhaupt erzeugen zu können, ist das Perkussieren und Trepanieren in unterschiedlicher Fokuslage notwendig. Schaufelbereiche, d.h. die Innenwand 7, die nicht exakt in der Fokuslage 22 des Laserstrahles 13 liegen, können dabei nicht beschädigt werden.

Die Wand 10 ist mehrere Millimeter dick, vorzugsweise 6mm - 8mm.
Der Hohlraum 4 bzw. der Abstand der äußeren Wand 10 zur Innenwand 7 beträgt ebenfalls mehrere Millimeter, mindestens 3mm, insbesondere mindestens 5mm.

Deshalb wird beim Bohren kein Innenschutz im Hohlraum 4 benötigt und die Innenwand 7 wird durch die Laserstrahlen mit sehr geringer Energie nicht beeinflusst.
Vor- und Nachbereitungsprozesse wie Wachsen und Entfernen wie Entwachsen können dabei komplett entfallen und stellen eine erhebliche Verkürzung des Prozesses dar, auch wenn nur das letzte Teilstück 19, was maximal 10% der Wanddicke der Wand 10 ausmacht, mit diesen Laserparametern so bearbeitet wird. Es ist nämlich nicht notwendig, das gesamte Durchgangsloch 25 mit diesen Laserparametern bei geringer Energie zu bearbeiten.

Die Figur 2 zeigt in perspektivischer Ansicht eine Laufschaufel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 und eine Schaufelspitze 415 auf.
Als Leitschaufel 130 kann die Schaufel 130 an ihrer Schaufelspitze 415 eine weitere Plattform aufweisen (nicht dargestellt).

Im Befestigungsbereich 400 ist ein Schaufelfuß 183 gebildet, der zur Befestigung der Laufschaufeln 120, 130 an einer Welle oder einer Scheibe dient (nicht dargestellt).
Der Schaufelfuß 183 ist beispielsweise als Hammerkopf ausgestaltet. Andere Ausgestaltungen als Tannenbaum- oder Schwalbenschwanzfuß sind möglich.
Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet.
Solche Superlegierungen sind beispielsweise aus der EP 1 204 776 B1, EP 1 306 454, EP 1 319 729 A1, WO 99/67435 oder WO 00/44949 bekannt.
Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind.

Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt.
Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.
Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures).
Solche Verfahren sind aus der US-PS 6,024,792 und der EP 0 892 090 A1 bekannt.

Ebenso können die Schaufeln 120, 130 Beschichtungen gegen Korrosion oder Oxidation aufweisen, z. B. (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf)). Solche Legierungen sind bekannt aus der EP 0 486 489 B1, EP 0 786 017 B1, EP 0 412 397 B1 oder EP 1 306 454 A1.
Die Dichte liegt vorzugsweise bei 95% der theoretischen Dichte.

Auf der MCrAlX-Schicht (als Zwischenschicht oder als äußerste Schicht) bildet sich eine schützende Aluminiumoxidschicht (TGO = thermal grown oxide layer).

Vorzugsweise weist die Schichtzusammensetzung Co-30Ni-28Cr-8Al-0,6Y-0,7Si oder Co-28Ni-24Cr-10Al-0,6Y auf. Neben diesen kobaltbasierten Schutzbeschichtungen werden auch vorzugsweise nickelbasierte Schutzschichten verwendet wie Ni-10Cr-12Al-0,6Y-3Re oder Ni-12Co-21Cr-11Al-0,4Y-2Re oder Ni-25Co-17Cr-10Al-0,4Y-1,5Re.

Auf der MCrAlX kann noch eine Wärmedämmschicht vorhanden sein, die vorzugsweise die äußerste Schicht ist, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.
Die Wärmedämmschicht bedeckt die gesamte MCrAlX-Schicht. Durch geeignete Beschichtungsverfahren wie z.B. Elektronenstrahlverdampfen (EB-PVD) werden stängelförmige Körner in der Wärmedämmschicht erzeugt.
Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen. Die Wärmedämmschicht ist also vorzugsweise poröser als die MCrAlX-Schicht.

Wiederaufarbeitung (Refurbishment) bedeutet, dass Bauteile 120, 130 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse im Bauteil 120, 130 repariert. Danach erfolgt eine Wiederbeschichtung des Bauteils 120, 130 und ein erneuter Einsatz des Bauteils 120, 130.

Die Schaufel 120, 130 kann hohl oder massiv ausgeführt sein.

Wenn die Schaufel 120, 130 gekühlt werden soll, ist sie hohl und weist ggf. noch Filmkühllöcher 418 (gestrichelt angedeutet) auf.

## Patentansprüche

1. Verfahren zum Herstellen eines Durchgangslochs (25) in einer Wand (10) eines hohlen Bauteils (1),
bei dem Laserpulse
mit Pulsdauern von 0,1ms - 0,3ms,
insbesondere bei einer Pulsfrequenz von 20Hz - 30Hz und ganz insbesondere mit einer Energie von 2J - 3J verwendet werden und
die Fokuslage des Laserstrahls (13) angepasst wird.

2. Verfahren nach Anspruch 1,
bei dem nur maximal 10% der Dicke der Wand (10) des hohlen Bauteils (1, 120, 130) abgetragen wird und der darüberliegende Bereich mit deutlich höheren Energien und/oder Pulsdauern und/oder höheren Frequenzen abgetragen wird, wobei der Unterschied mindestens 10%,
insbesondere mindestens 20% beträgt.

3. Verfahren nach Anspruch 1 oder 2,
bei dem in dem Hohlraum (4) hinter der Wand (10),
in dem das Durchgangsloch (25) erzeugt wird,
kein Schutz oder Material vorhanden ist.

4. Verfahren nach einem oder mehreren der Ansprüche 1, 2 oder 3,
bei dem der Fokus des Laserstrahls (13) im Durchgangsloch (25) liegt,
insbesondere auf der Oberfläche (28) des noch abzutragenden Bereichs (19).

5. Verfahren nach einem oder mehreren der Ansprüche 1 bis 4,
bei dem ein Millisekundenlaser verwendet wird.

6. Verfahren nach einem oder mehreren der Ansprüche 1 bis 4,
bei dem ein Nanosekundenlaser verwendet wird.

7. Verfahren nach einem oder mehreren der Ansprüche 1 bis 5,
bei dem das Trepanierverfahren angewendet wird.
